# EUROPEAN PATENT APPLICATION

(11) **EP 2 138 942 A1**
(43) Date of publication of application: **30.12.2009**
(21) Application number: 09162041.9
(22) Date of filing: 05.06.2009
(51) Int. Cl.: G06F 17/30

(54) **Facility information display system, facility information display method, and program**

(30) Priority: 26.06.2008 JP 2008167671
(71) Applicant: Aisin AW Co., Ltd., Fujii-cho Anjo-shi, Aichi 444-1192 (JP)
(72) Inventor: Kawauchi, Hiroshi, Okazaki-shi, Aichi 444-8564 (JP)
(74) Representative: Delumeau, François Guy

(57) **Abstract**

A facility information display system includes an input unit (34, 36) for inputting a letter string representing a search condition; a point search processing unit (31; 54) that, when the letter string has been inputted, refers to facility data and searches for facilities including the letter string; a facility information acquisition processing unit (31; 54) that acquires facility information of the searched facilities; and a compression processing unit (31; 54) that, based on the letter string representing the search condition, compresses the facility information to be displayed on a search result display screen in a display unit 35. The facility information to be displayed on the search result display screen in the display unit 35 is compressed based on the letter string representing the search condition. Therefore, if the letter string forming the facility information is long, the facility information can be displayed sufficiently on the search result display screen.

## Description

### BACKGROUND OF THE INVENTION

### 1. Field of the Invention

The present invention relates to facility information display systems, facility information display methods, and programs.

### 2. Description of the Related Art

In conventional navigation devices, when a driver as an operator inputs a destination and sets search conditions, route search processing is performed based on the search conditions, and a route from a departure point represented by a current position to the destination is searched based on map data. Then, the searched route, i.e., a search route is displayed together with a vehicle position indicating the current position of a vehicle on a map screen formed in a display unit, and search route guidance, i.e., route guidance is performed. In addition to the display of the search route on the map screen, the route guidance by audio output is also performed.

In the navigation devices, to set a specific point as the destination or register the specific point as a registered point, the driver inputs a name, a telephone number, an address of a specific facility or the like at the point on a point input screen formed in the display unit of the navigation device. For example, if the driver inputs a facility name, facilities are searched based on the facility name, and names and addresses of the searched facilities are displayed in a list (a facility list) on a search result display screen formed in the display unit.

Consequently, when the driver scrolls the list on the search result display screen if necessary, and then searches for and selects a desired facility among the displayed facilities, the selected facility is set as the destination or registered as the registered point.

On the search result display screen, a plurality of lines are formed and facility information including the name and the address of each facility is displayed in a display frame of each line. However, if the letter string forming the facility information is long enough to exceed the display frame of the line, the facility information cannot be displayed sufficiently in the display frame. As the result, it becomes difficult for the driver to search for the desired facility based on the displayed facility information. Then, a navigation device is proposed in which the facility information is displayed in a plurality of lines if the letter string is long enough to exceed the display frame of the line (refer to Japanese Patent Application; Publication No. JP-A-2000-39333, for example).

### SUMMARY OF THE INVENTION

However, in the conventional navigation devices, the number of the facility, which can be displayed on the search result display screen, decreases since the facility information is displayed in a plurality of lines. Then, the driver needs to scroll the search result display screen repeatedly to search for the desired facility. It is troublesome for the driver.

The present invention solves the problems of the above-mentioned conventional navigation devices, and thus it is an object thereof to provide a facility information display system, a facility information display method, and a program, in which the desired facility can be easily searched based on the displayed facility information.

To achieve the aforementioned object, the present invention provides a facility information display system comprising: an input unit for inputting a letter string representing a search condition; a point search processing unit that, when the letter string has been inputted, refers to facility data and searches for facilities including the letter string; a facility information acquisition processing unit that acquires facility information of the searched facilities; and a compression processing unit that, based on the letter string representing the search condition, compresses the facility information to be displayed on a search result display screen in a display unit.

According to the present invention, the facility information to be displayed on the search result display screen in the display unit is compressed based on the letter string representing the search condition. Therefore, if the letter string forming the facility information is long, the facility information can be displayed sufficiently on the search result display screen. Consequently, the driver can easily search for the desired facility based on the displayed facility information.

### BRIEF DESCRIPTION OF THE DRAWINGS

FIG. 1 is a block diagram showing a navigation system in accordance with a first embodiment of the present invention.

FIG. 2 is a flowchart showing operations of a search result display processing unit in accordance with the first embodiment of the present invention.

FIG. 3 is a first view showing an example of a search result display screen in accordance with the first embodiment of the present invention.

FIG. 4 is a second view showing an example of the search result display screen in accordance with the first embodiment of the present invention.

FIG. 5 shows an example of the search result display screen in accordance with a second embodiment of the present invention.

FIG. 6 is a first view showing an example of the search result display screen in accordance with a third embodiment of the present invention.

FIG. 7 is a second view showing an example of the search result display screen in accordance with the third embodiment of the present invention.

FIG. 8 shows an example of the search result display screen in accordance with a fourth embodiment of the present invention.

### DETAILED DESCRIPTION OF THE PREFERRED EMBODIMENT

Hereinafter, embodiments of the present invention will be described with reference to the drawings. In this case, a navigation system as a facility information display system is described.

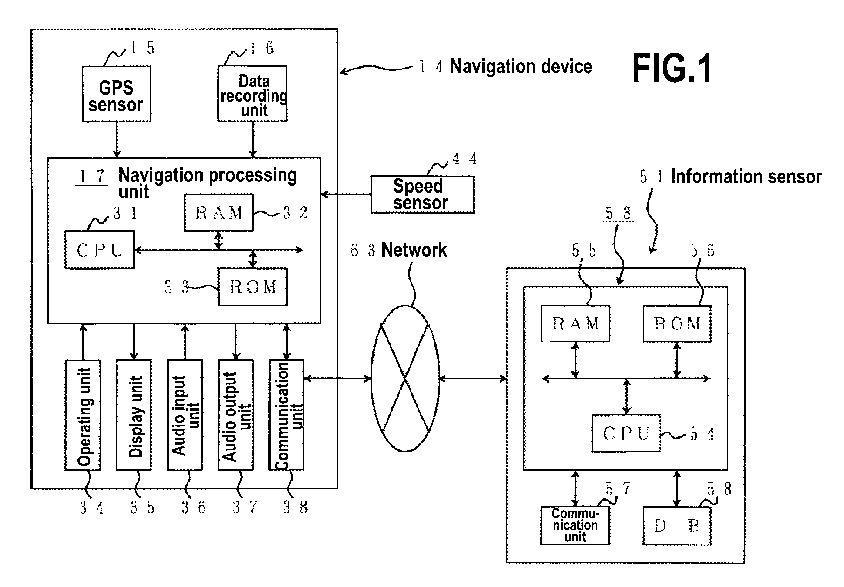

FIG. 1 is a block diagram showing a navigation system in accordance with a first embodiment of the present invention.

In FIG. 1, reference numeral 14 denotes an information terminal, for example, a navigation device serving as an in-vehicle device installed in a vehicle. Reference numeral 63 denotes a network. Reference numeral 51 denotes an information center serving as an information provider. The navigation system includes the navigation device 14, the network 63, the information center 51, and the like.

The navigation device 14 includes: a GPS sensor 15 serving as a current position detection unit that detects a current position of a vehicle as a vehicle position and a direction of the vehicle as a vehicle direction; a data recording unit 16 serving as an information recording unit in which map data and various other information are recorded; a navigation processing unit 17 that performs various kinds of arithmetic processing such as navigation processing and the like based on inputted information; an operating unit 34 serving as a first input unit for performing a predetermined input through an operation of a driver as an operator; a display unit 35 serving as a first output unit for performing various kinds of display using an image displayed on a screen (not shown) to perform a notification to the driver; an audio input unit 36 serving as a second input unit for performing a predetermined input by audio; an audio output unit 37 serving as a second output unit for performing a notification to the driver by audio; and a communication unit 38 serving as a transmitting and receiving unit that functions as a communication terminal. The GPS sensor 15, the data recording unit 16, the operating unit 34, the display unit 35, the audio input unit 36, the audio output unit 37, and the communication unit 38 are connected to the navigation processing unit 17. Further, a speed sensor 44 serving as a speed detection unit that detects a vehicle speed is connected to the navigation processing unit 17. In the present embodiment, the vehicle direction is detected by the GPS sensor 15; however, a direction sensor (not shown) serving as a direction detection unit for detecting the vehicle direction can be independently installed. In addition, the GPS sensor 15 also detects a time.

Map data is recorded in the data recording unit 16. The map data includes intersection data regarding an intersection, node data regarding a node, road data regarding a road link, search data that has been processed for search, facility data regarding a facility, and the like.

The facility data includes a data size, a name, a coordinate (a latitude and a longitude), a telephone number, a category, an address, detailed information, and the like, for each facility. The category includes a form categorized by purpose such as public facilities, transportation, department stores, supermarkets, outlet malls, shopping malls, amusement, and the like, and a form categorized by geography such as roads, rivers, mountains, ponds, and the like.

In addition, data for outputting predetermined information by the audio output unit 37, statistical data, travel history data, and the like are recorded in the data recording unit 16.

In order to record the various kinds of data, the data recording unit 16 includes a disk (not shown) such as a hard disk, a CD, a DVD, an optical disk, and the like as well as a head (not shown) such as a reading/writing head for reading and writing the various kinds of data and the like. Further, a memory card or the like can be used for the data recording unit 16.

The navigation processing unit 17 includes: a CPU 31 serving both as a control device that performs an overall control of the navigation device 14 and as an arithmetic device; a RAM 32 that is used as a working memory when the CPU 31 performs various kinds of arithmetic processing; a ROM 33 in which a program for control and various other programs for performing a route search to a destination, search route guidance, i.e., route guidance, and the like are recorded; and a flash memory (not shown) that is used to record various kinds of data, programs, and the like.

The operating unit 34 is used for achieving various kinds of functions in the navigation device 14 through an operation of the driver. The operating unit 34 includes a remote control, a keyboard, a mouse, and the like (not shown) that are installed independently of the navigation device 14, as well as a switch, a button, a key, a dial, and the like (not shown) serving as operating elements by parts formed on a casing of the navigation device 14 and the like. For the display unit 35, a display is used. In the present embodiment, for the operating unit 34 and the display unit 35, a touch panel further having a function of the operating unit can be used. In the touch panel, a key, a switch, a button, and the like serving as the operating elements as images are displayed on a screen, and a predetermined input operation can be performed by touching the key, the switch, the button, or the like.

The audio input unit 36 includes a microphone (not shown) or the like, and necessary information can be inputted by audio. The audio output unit 37 includes an audio synthesizer and a speaker (not shown), and various kinds of information are outputted by audio from the audio output unit 37.

The communication unit 38 includes a beacon receiver (not shown), a radio receiver (not shown), and the like. The beacon receiver receives various kinds of information such as traffic information, general information, and the like, which are transmitted from a road traffic information center or the like (not shown) as an information provider such as a VICS (a registered trademark) center, by a radio beacon, an optical beacon, or the like via a radio beacon device, an optical beacon device, or the like installed along a road. The radio receiver receives radio broadcasting such as FM multiple broadcasting via a radio station. The traffic information includes congestion information, regulatory information, parking information, traffic accident information, service area congestion state information, and the like, whereas the general information includes news, weather forecast, and the like. In addition, the communication unit 38 can receive the various kinds of information from the information center 51. To this end, the information center 51 includes a server 53, a communication unit 57 that is connected to the server 53, a data base (DB) 58 serving as an information recording unit, and the like. The server 53 includes a CPU 54 serving both as a control device and as an arithmetic device, a RAM 55, a ROM 56, and the like. The same data as the various kinds of data recorded in the data recording unit 16 is recorded in the data base 58. Further, the information center 51 can provide the driving history data collected from a plurality of vehicles (an own vehicle or other vehicles) in real time.

The navigation system, the navigation processing unit 17, the CPUs 31 and 54, the server 53, and the like function as a computer independently or by combining two or more units, and perform various kinds of arithmetic processing based on various kinds of programs, data, and the like. A storage device or a recording medium includes the data recording unit 16, the RAMs 32 and 55, the ROMs 33 and 56, the data base 58, the flash memory, and the like. Further, an MPU or the like can be used as the arithmetic device in place of the CPUs 31 and 54.

Next, basic operations of the navigation system having the above structure are described.

At first, when the operating unit 34 is operated by the driver and the navigation device 14 is started, an initialization processing unit (not shown) of the CPU 31 performs initialization processing to read the vehicle position and the vehicle direction detected by the GPS sensor 15 and initialize various kinds of data. A matching processing unit (not shown) of the CPU 31 performs matching processing to locate the vehicle position by determining on which road link the vehicle position is positioned based on the track of the read vehicle position, the shape and the arrangement of each of road links that form a road in the vicinity of the vehicle position, and the like.

Subsequently, a basic information acquisition processing unit (not shown) of the CPU 31 performs basic information acquisition processing to acquire the map data by reading the data from the data recording unit 16 or by receiving the data from the information center 51 or the like via the communication unit 38.

A display processing unit (not shown) of the CPU 31 performs display processing to form a map screen in the display unit 35 and display the vehicle position, the map of the vicinity of the vehicle position, and the vehicle direction on the map screen. Consequently, the driver can drive the vehicle following the vehicle position, the map of the vicinity of the vehicle position, and the vehicle direction.

When the driver inputs a specific point as the destination through an operation of the operating unit 34, a destination setting processing unit (not shown) of the CPU 31 performs destination setting processing to set the destination. Also, it is possible to set a departure point through an input if necessary. Further, it is possible to register a specific point as a registered point in advance and set the registered point as the destination. Subsequently, when the driver operates the operating unit 34 to input search conditions, a route search processing unit (not shown) of the CPU 31 performs route search processing to read the vehicle position, the destination, the search conditions, and the like, read the search data and the like from the data recording unit 16, search for a route from the departure point represented by the vehicle position to the destination under the search conditions on the basis of the vehicle position, the destination, and the search data, and output route data indicating the search route. In this case, a route in which a total of the link cost assigned to each road link is the smallest is set as the search route.

Subsequently, a guidance processing unit (not shown) of the CPU 31 performs guidance processing to perform route guidance. To this end, a route display processing unit of the guidance processing unit performs route display processing to read the route data and display the search route on the map screen according to the route data. In this case, an audio output processing unit of the guidance processing unit performs audio output processing to perform the route guidance by outputting the search route by audio from the audio output unit 37, if necessary.

Upon receiving the traffic information via the communication unit 38, the display processing unit converts the traffic information into a congestion zone as a traffic condition indicator and displays the congestion zone along a road on the map screen. In this case, the congestion zone is displayed extended from the starting point to the ending point of the congestion, and the color of the congestion zone is changed in red, orange, green, or the like according to the level of the congestion. Thus, the driver can know congestion conditions of the roads in the route to be traveled by the vehicle, the search route, or the like.

In the navigation device 14, as described above, it is possible to set a specific point as the destination and register the specific point as the registered point. When the driver selects the specific point on the map screen and presses an execution button as the operating element on the map screen, the selected point is set as the destination or registered as the registered point. In addition, it is possible to form a point input screen in the display unit 35, set a facility at the specific point as the destination or register the facility as the registered point on the point input screen.

To this end, when the driver operates the operating unit 34 to select destination setting on a menu screen, a point search processing unit of the destination setting processing unit performs point search processing. When the driver operates the operating unit 34 to select a point registration on the menu screen, a point registration processing unit (not shown) of the CPU 31 performs point registration processing and a point search processing unit of the point registration processing unit performs point search processing.

Next, operations of the point search processing unit are described. In this case, the point search processing unit performs the same processing in content in setting the destination and registering a point. Therefore, only operations of the point search processing unit in setting the destination are described, and operations of the point search processing unit in registering the point are omitted.

At first, when the driver selects the destination setting on the menu screen, an input guidance processing unit of the point search processing unit performs input guidance processing to form an input menu screen in the display unit 35 and display a facility name, a telephone number, an address, and the like as input items for searching for a specific facility as the destination on the input menu screen. Subsequently, when the driver selects a specific input item among the facility name, the telephone number, and the address, the input guidance processing unit forms in the display unit 35 a name input screen, a telephone number input screen, an address input screen, or the like as the point input screen corresponding to the input item.

Then, when the driver inputs the input item on the point input screen, a search execution processing unit of the point search processing unit performs search execution processing to refer to the facility data and search for facilities based on the input item.

When facilities are searched, a search result display processing unit of the destination setting processing unit performs search result display processing to form a search result display screen in the display unit 35 and display the names and the addresses of the searched facilities in a list (a facility list).

Consequently, when the driver scrolls the search result display screen if necessary, detects and selects a desired facility among the displayed facilities, a setting execution processing unit of the destination setting processing unit performs setting execution processing to set the selected facility as the destination.

In the search result display screen, a plurality of lines are formed and facility information including the name and the address of each facility is displayed in a display frame of each line. However, if the letter string forming the facility information is long enough to exceed the display frame of the line, the facility information cannot be displayed sufficiently in the display frame. As the result, it becomes difficult for the driver to search for the desired facility based on the displayed facility information.

Here, a method is proposed in which the facility information is displayed in a plurality of lines if the letter string is long enough to exceed the display frame of the line. However, in this case, the number of the facility displayable on the search result display screen decreases, and the driver needs to scroll the search result display screen repeatedly to search for the desired facility. It is troublesome for the driver.

According to the embodiments of the present invention, the letter string is shortened by compressing the facility information such that a part of the letter string forming the facility information is omitted.

Next, operations of the search result display processing unit are described.

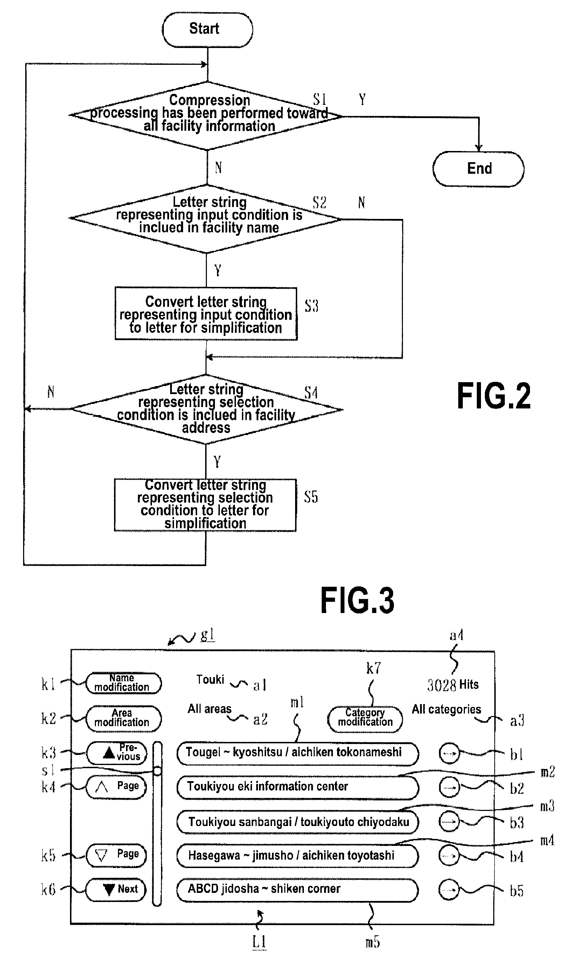

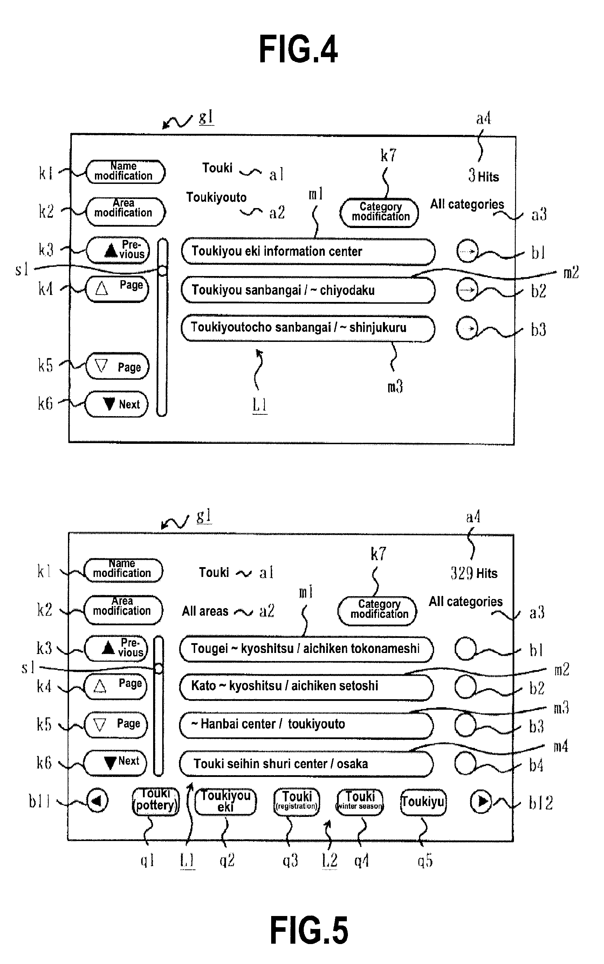

FIG. 2 is a flowchart showing the operations of the search result display processing unit in accordance with the first embodiment of the present invention. FIG. 3 is a first view showing an example of the search result display screen in accordance with the first embodiment of the present invention. FIG. 4 is a second view showing an example of the search result display screen in accordance with the first embodiment of the present invention.

In FIGS. 3 and 4, g1 denotes the search result display screen. k1 to k7, bi (i= 1, 2...) denote keys as first operation elements. s1 denotes a scroll bar as a second operation element. a1 to a3 denote search condition display parts as first display areas. a4 denotes a number of hits display part as a second display area. L1 denotes a list display part as a third display area. In the list display part L1, the display frame of each line mi (i= 1, 2...) as a fourth display area and the key bi are displayed. The number of hits display part a4, the list display part L1, and the display frame mi function as search result display parts for displaying a search result by the search execution processing unit.

When the driver selects the name as the input item, inputs the facility name by the Japanese syllabary on the name input screen, and presses a predetermined execution key, the search result display processing unit forms the search result display screen g1, forms the keys k1 to k7, bi, and the scroll bar s1, reads the search conditions, the number of hits, and the facility information of the searched facilities, and displays the search conditions representing conditions for searching for facilities in the search condition display parts a1 to a3, the number of hits of the search result in the number of hits display part a4, and the facility information of the searched facilities in the display frame mi.

In the search condition display part a1, as shown in FIGS. 3 and 4, the letter string that has been inputted as the facility name on the point input screen is displayed. For example, "TOUKI" is displayed. The letter string representing the search condition, which is set through a letter input by the driver, represents an input condition forming at least a part of the facility name. In addition, the driver can change the input condition by touching the key k1 "Name modification" and modifying the letter string.

When the input condition is set, the search execution processing unit searches for facilities including the letter string "TOUKI" in the names by letter (i.e., letter unit).

When the driver inputs the letter string "TOUKI", there is a possibility of searching for facilities including, in the names, keywords that are predicted by the letter string "TOUKI" such as "TOUKI (pottery)", "TOUKIYOU EKI", "TOUKI (registration)", "TOUKI (winter season)", "TOUKIYU", and the like. Therefore, the search execution processing unit searches for facilities including, in the names, the keywords "TOUKI (pottery)", "TOUKIYOU EKI", "TOUKI (registration)", "TOUKI (winter season)", "TOUKIYU", and the like.

Further, as shown in FIG. 3, an area selected for narrowing the facilities recorded as the facility data in the data recording unit 16 is displayed in the search condition display part a2. For example, "All areas" representing all over Japan is displayed. The area representing the search condition, which is set through the driver's selection, represents a selection condition forming at least a part of the facility address. In addition, the driver can change the area by touching the key k2 "Area modification". And, as shown in FIG. 4, by selecting a prefecture ("to", "do", "fu", or "ken"), or selecting a city, a town, or a village ("shi", "cho", or "mura"), the driver can further narrow the facilities and decrease the number of hits of the search result displayed in the number of hits display part a4.

When the selection condition is set, the search execution processing unit refers to the facility data of all over Japan to perform search.

The category selected for narrowing the facilities recorded as the facility data in the data recording unit 16 is displayed in the search condition display part a3. For example, "All categories" representing all categories is displayed. The category representing the search condition, which is set by the driver's selection, represents the selection condition. In addition, the driver can change the category by touching the key k7 "Category modification". And, by selecting a form categorized by purpose such as public facilities, transportation, department stores, supermarkets, outlet malls, shopping malls, amusement, and the like, or a form categorized by geography such as roads, rivers, mountains, ponds, and the like, the driver can further narrow the facilities and decrease the number of hits of the search result displayed in the number of hits display part a4.

When the selection conditions are set, the search execution processing unit refers to the facility data of all categories to perform the search.

When the search execution processing unit performs the search based on the input condition displayed in the search condition display part a1 and the selection conditions displayed in the search condition display parts a2 and a3, the search result is displayed as the number of hits in the number of hits display part a4, and as a list of the facility information of the facilities in the list display part L1.

The list display part L1 includes a plurality of the display frames mi and the keys bi formed associated with the respective display frames mi. In each of the display frames mi, the facility information of each facility is displayed such that the name and the address are placed side by side with use of a separation symbol "/". If the letter string representing the facility information (inc. the symbol "/") is so long that the entire letter string cannot be displayed in the display frame, when the driver touches the corresponding key bi, the letter string in the display frame is scrolled and a non-displayed part can be displayed.

In addition, in the list display part L1, the display frames mi of a predetermined number n are formed. 5 display frames mi are formed in the present embodiment. If the number of hits exceeds n, n display frames mi are formed. If the number of hits is n or less, the display frames for the number of hits are formed. And, if the number of hits exceeds n, the driver can touch the keys k3 to k6 to scroll the facility list in the list display part L1. When the key k3 is touched, the list moves upward for 1 display frame. When the key k4 is touched, the list moves upward for the display frames for 1 page. When the key k5 is touched, the list moves downward for display frames for 1 page. When the key k6 is touched, the list moves downward for 1 display frame. By moving the scroll bar s1, the facility information of the non-displayed facilities in the list can be displayed.

In the meantime, as described before, the facility information is displayed in the display frame mi. However, if the letter string representing the facility information is long, only a part of the letter string is displayed in the display frame mi.

Consequently, it becomes difficult to identify each facility only with the part of letter string displayed in the display frame mi, and the driver has to touch the key bi to scroll the letter string in the display frame. As a result, not only an operability of the operating unit 34 becomes worse, but also the driver takes much time in searching for the desired facility.

Here, according to the present embodiment, in order to improve the operability of the operating unit 34 and reduce the time required for searching for the facility that the driver looks for, a specific letter string in the letter string to be displayed in the display frame mi is compressed by converting the specific letter string to a letter (symbol) for simplification such as " - " and displayed.

To this end, a facility information acquisition processing unit of the search result display processing unit performs facility information acquisition processing to read and acquire the facility information of the searched facilities. A compression processing unit of the search result display processing unit performs compressing processing to compress the facility information.

That is, a compression condition determination processing unit of the compression processing unit performs compression condition determination processing to determine whether or not a first compression condition has been met by determining whether the letter string representing the input condition is included in the facility name by word (i.e., word unit). If the letter string representing the input condition is included in the facility name by word and the first compression condition is met, a letter string conversion processing unit of the compression processing unit performs letter string conversion processing to convert the letter string representing the input condition to the letter for simplification "∼" in the facility name.

In addition, the compression condition determination processing unit determines whether or not a second compression condition has been met by determining whether the letter string representing the selection condition is included in the facility address by word. If the letter string representing the selection condition is included in the facility address by word and the second compression condition is met, the letter conversion processing unit converts the letter string representing the selection condition to the letter for simplification " - " in the facility address.

For example, in the search result display screen g1 in FIG. 3, the letter string representing the input condition displayed in the search condition display part a1 is "TOUKI". Therefore, if the letter string "TOUKI" is included in the facility name by word, the letter string "TOUKI" is converted to " - ". In the case of the facility name in the display frame m1, the letter string "TOUGEI· TOUKI KYOSHITSU" is converted to "TOUGEI· ∼ KYOSHITSU". In the case of the facility name in the display frame m4, the letter string "HASEGAWA TOUKI JIMUSHO" is converted to "HASEGAWA - JIMUSHO". In the case of the facility name in the display frame m5, the letter string "ABCD JIDOSHA TOUKI SHIKEN corner" is converted to "ABCD JIDOSHA ∼ SHIKEN corner".

In this case, "TOUKIYOU EKI" is included in the facility name in the display frame m2, and "TOUKIYOU" is included in the facility name in the display frame m3. However, the letter string "TOUKI" is a part of "TOUKIYOU EKI" and "TOUKIYOU". As "TOUKI" is included in the facility name by letter but not by word, the letter string is not converted.

The selection condition displayed in the search condition display part a2 is "All area" and does not include letter string. Therefore, a conversion of the letter string is not performed in the facility address.

Also, in the search result display screen g1 in FIG. 4, the letter string representing the selection condition displayed in the search condition display part a2 is "TOUKIYOUTO". Therefore, if the letter string "TOUKIYOUTO" is included in the facility address by word, the letter string "TOUKIYOUTO" is converted to "∼". In the case of the facility address in the display frame m2, "TOUKIYOUTO CHIYODAKU" is converted to "∼ CHIYODAKU". In the case of the facility address in the display frame m3, "TOUKIYOUTO SHINJUKUKU" is converted to "∼ SHINJUKUKU". In addition, the letter string "TOUKIYOUTO" is included in the facility name in the display frame m3. However, the conversion of the letter string is not performed because the letter string "TOUKIYOUTO" is included in the facility name.

According to the present embodiment, "∼" is used as the letter for simplification. However, another letter can be used if the letter is never used in representing the input condition and the selection condition, or is possible to be used but extremely rare such as "?", "!", or "%". In addition, although " - " is used as both the letter representing the input condition and the letter representing the selection condition in the present embodiment, different letters can be used as the letter representing the input condition and the letter representing the selection condition.

As described above, according to the present embodiment, if the first compression condition is met, the letter string representing the input condition is converted to "∼" in the facility name. If the second compression condition is met, the letter string representing the selection condition is converted to "∼" in the facility address. Therefore, if the letter string forming the facility information is long, the facility information is displayed sufficiently in the display frame mi. As the result, the driver can easily search for the desired facility based on the displayed facility information.
In one embodiment of the present invention, each of the point search processing unit, facility information acquisition processing unit and compression processing unit is implemented by the CPU 31.
In another embodiment, at least one of the three above processing units is implemented by the CPU 54.

Next, the flowchart is explained.
Step S1: Determine whether or not compression processing has been performed toward all facility information. When the compression processing has been performed toward all facility information, terminate the process. When the compression processing has not been preformed toward all facility information, proceed to Step S2.
Step S2: Determine whether or not the letter string representing the input condition is included in the facility name. When the letter string representing the input condition is included in the facility name, proceed to Step S3. When the letter string representing the input condition is not included in the facility name, proceed to Step S4.
Step S3: Convert the letter string representing the input condition to the letter for simplification.
Step S4: Determine whether or not the letter string representing the selection condition is included in the facility address. When the letter string representing the selection condition is included in the facility address, proceed to Step S5. When the letter string representing the selection condition is not included in the facility address, return to Step 1.
Step S5: Convert the letter string representing the selection condition to the letter for simplification and return to Step S1.

Next, a second embodiment of the present invention is described. For the portions having the same structure as the first embodiment, the same reference numerals are assigned. As for the effects of the invention to be brought due to the fact of having the same structure, the effects of the same embodiment are referred.

FIG. 5 shows an example of the search result display screen in accordance with the second embodiment of the present invention.

In this case, a list operation part L2 as a third operation element is formed at a predetermined position of the search result display screen g1. The list display part L2 is formed at the bottom in the present embodiment. In the list operation part L2, the key qj (j= 1, 2, ...) as a fourth operation element and scroll buttons b11 and b 12 as fifth operation elements for scrolling the list of the key qj are displayed. Then, the keywords that are predicted by the letter string "TOUKI" displayed in the search condition display part a1 such as "TOUKI (pottery)", "TOUKIYOU EKI", "TOUKI (registration)", "TOUKI (winter season)", "TOUKIYU", and the like are assigned to each of the key qj. (In Japanese, there are words written in the same spelling but having different meanings.) If the keyword "TOUKI (pottery)" is selected by touching the key q1 for example, only facilities including the keyword "TOUKI (pottery)" in the facility name among the search result are displayed in the list. The search result is acquired by the search under the input condition displayed in the search condition display part a1 and the selection condition displayed in the search condition display parts a2 and a3. Then, the number of the facilities including the keyword "TOUKI(pottery)" in the names is displayed in the number of hits display part a4.

According to the present embodiment, the search is performed using the letter string "TOUKI" and the facilities including the keyword "TOUKI(pottery)" in the names are displayed. However, the search can be performed using the keyword "TOUKI(pottery)" by Chinese character directly.

Next, a third embodiment of the present invention is described in which the search result display screen g1 is formed in English. For the portions having the same structure as the first embodiment, the same reference numerals are assigned. As for the effects of the invention to be brought due to the fact of having the same structure, the effects of the same embodiment are referred.

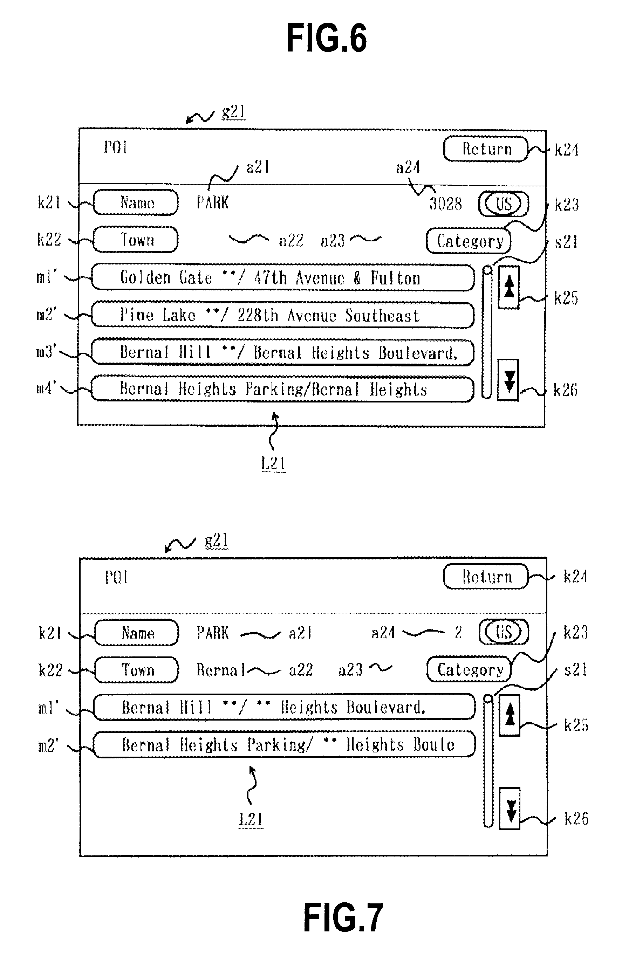

FIG. 6 is a first view showing an example of the search result display screen in accordance with the third embodiment of the present invention. FIG. 7 is a second view showing an example of the search result display screen in accordance with the third embodiment of the present invention.

In FIGS. 6 and 7, g21 denotes the search result display screen. k21 to k26 denote the keys as the first operation elements. s21 denotes the scroll bar as the second operation element. a21 to a23 denote the search condition display parts as the first display areas. a24 denotes the number of hits display part as the second display area. L21 denotes the list display part as the third display area. The key k24 denotes a return key. In the list display part L21, the display frame of each line mi' (i'= 1, 2...) as the fourth display area is displayed. The number of hits display part a24, the list display part L21, and the display frame mi function as the search result display parts for displaying the search result by the search execution processing unit.

When the driver inputs the facility name by the Japanese syllabary on the point input screen, and presses a predetermined execution key, the search result display processing unit forms the search result display screen g21, forms the keys k21 to k26 and the scroll bar s21, and displays the search conditions in the search condition display parts a21 to a23, the number of hits of the search result in the number of hits display part a24, and the facility information of the searched facilities in the display frame mi'.

In the search condition display part a21, the letter string that has been inputted as the facility name on the point input screen is displayed. For example, "PARK" is displayed. The letter string representing the search condition, which is set through a letter input by the driver, represents the input condition forming at least a part of the facility name. In addition, the driver can change the input condition by touching the key k21 "Name" and modifying the letter string.

When the input condition is set, the search execution processing unit searches for facilities including the letter string "PARK" in the names by letter.

When the driver inputs the letter string "PARK", there is a possibility of searching for facilities including, in the names, keywords that are predicted by the letter string "Park" such as "Park", "Parking", and the like. Therefore, the search execution processing unit searches for facilities including, in the names, the keywords "Park", "Parking", and the like.

Further, an area selected for narrowing the facilities recorded as the facility data in the data recording unit 16 is displayed in the search condition display part a22. If the area is not selected, the search condition display part a22 is displayed in blank. The area representing the search condition, which is set through the driver's selection, represents the selection condition. The driver can change the area by touching the key k22 "Town", further narrow the facilities, and decrease the number of hits of the search result displayed in the number of hits display part a24.

When the selection condition is set, the search execution processing unit refers to the facility data of all areas to perform the search.

The category selected for narrowing the facilities recorded as the facility data in the data recording unit 16 is displayed in the search condition display part a23. If the category is not selected, the search condition display part a23 is displayed in blank. The category representing the search condition, which is set by the driver's selection, represents the selection condition. In addition, the driver can change the category by touching the key k23 "Category", further narrow the facilities, and decrease the number of hits of the search result displayed in the number of hits display part a24.

When the selection condition is set, the search execution processing unit refers to the facility data of all categories to perform the search.

When the search execution processing unit performs the search based on the input condition displayed in the search condition display part a21 and the selection condition displayed in the search condition display parts a22 and a23, the search result is displayed as the number of hits in the number of hits display part a24, and as a list of the facility information of the facilities in the list display part L21.

The list display part L21 includes a plurality of the display frames mi'. In each of the display frames mi', the facility information of each facility is displayed such that the name and the address are placed side by side with use of a separation symbol "/".

In addition, in the list display part L21, the display frames mi' of a predetermined number n' are formed. 4 display frames mi' are formed in the present embodiment. If the number of hits exceeds n', n' display frames mi' are formed. If the number of hits is n' or less, the display frames for the number of hits are formed. And, the number of hits exceeds n', the driver can touch the keys k25 or k26 to scroll the facility list in the list display part L21. When the key k25 is touched, the list moves upward for 1 display frame. When the key k26 is touched, the list moves downward for 1 display frame. By moving the scroll bar s21, the facility information of the non-displayed facilities in the list can be displayed.

In the meantime, as described before, the facility information is displayed in the display frame mi'. However, if the letter string representing the facility information is long, only a part of the letter string is displayed in the display frame mi'.

Consequently, it becomes difficult to identify the facilities only with the part of letter string displayed in the display frame mi', and the driver takes time in searching for the desired facility.

Here, according to the present embodiment, in order to reduce the time required for searching for the facility that the driver looks for, a predetermined letter string in the letter string to be displayed in the display frame mi' is converted to the letter (symbol) for simplification such as "**".

To this end, the compression processing unit compresses the facility information to be displayed in the display frame mi'.

The compression condition determination processing unit determines whether or not the first compression condition has been met by whether the letter string representing the input condition is included in the facility name by word. If the letter string representing the input condition is included in the facility name by word and the first compression condition is met, the letter string conversion processing unit converts the letter string representing the input condition to the letter "**" in the facility name.

In addition, the compression condition determination processing unit determines whether or not the second compression condition has been met by whether the letter string representing the selection condition is included in the facility address by word. If the letter string representing the selection condition is included in the facility address by word and the second compression condition is met, the letter conversion processing unit converts the letter string representing the selection condition to the letter "**" in the facility address.

For example, in the search result display screen g21 in FIG. 6, the letter string representing the input condition displayed in the search condition display part a21 is "PARK". Therefore, if the letter string "PARK" is included in the facility name by word, the letter string "PARK" is converted to "**". In the case of the facility name in the display frame m1', the letter string "Golden Gate Park" is converted to "Golden Gate **". In the case of the facility name in the display frame m2', the letter string "Pine Lake Park" is converted to "Pine Lake **". In the case of the facility name in the display frame m3', the letter string "Bernal Hill Park" is converted to "Bernal Hill **".

"Parking" is included in the facility name in the display frame m4'. However, the letter string "PARK" is a part of "Parking" and not included in the facility name by word. Therefore, the letter string is not converted.

The selection condition displayed in the search condition display part a22 is all areas. Therefore, the conversion of the letter string is not performed in the facility address.

In addition, in the search result display screen g21 in FIG. 7, the letter string representing the input condition displayed in the search condition display part a21 is "PARK" and the letter string representing the selection condition displayed in the search condition display part a 22 is "Bernal". If the letter string "PARK" is included in the facility name by word, the letter string "PARK" is converted to the letter "**". If the letter string "Bernal" is included in the facility address by word, the letter string "Bernal" is converted to the letter "**". In the case of the facility name in the display frame m1', the letter string "Bernal Hill Park" is converted to "Bernal Hill **". In the case of the facility address in the display frame m1', the letter string "Bernal Heights Boulevard" is converted to "** Heights Boulevard". In the case of the facility address in the display frame m2', the letter string "Bernal Heights Boulevard" is converted to "** Heights Boulevard".

As described above, according to the present embodiment, if the first compression condition is met, the letter string representing the input condition is converted to "**" in the facility name. If the second compression condition is met, the letter string representing the selection condition is converted to "**" in the facility address. Therefore, if the letter string forming the facility information is long, the facility information is displayed sufficiently in the display frame mi'. As the result, the driver can easily search for the desired facility based on the displayed facility information.

Next, a fourth embodiment of the present invention is described. For the portions having the same structure as the first embodiment, the same reference numerals are assigned. As for the effects of the invention to be brought due to the fact of having the same structure, the effects of the same embodiment are referred.

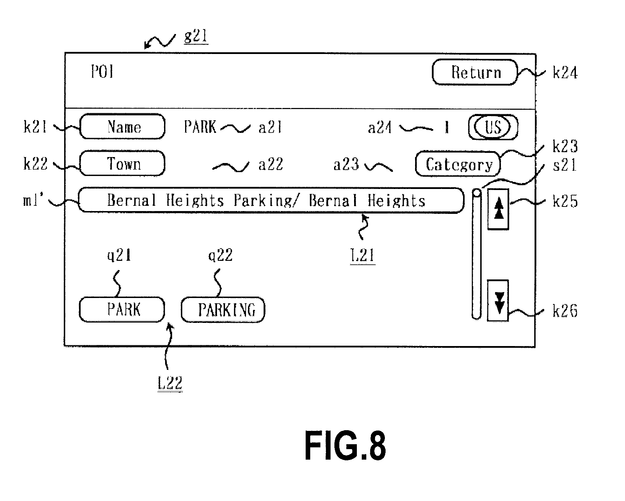

FIG. 8 shows an example of the search result display screen in accordance with the fourth embodiment of the present invention.

In this case, a list operation part L22 as the third operation element is formed at a predetermined position of the search result display screen g21. The list operation part L22 is formed at the bottom in the present embodiment. In the list operation part L22, the key qj' (j= 1, 2, ...) as the fourth operation element is displayed. Then, the keywords that are predicted by the letter string "PARK" displayed in the search condition display part a21 such as "PARK", "PARKING", and the like are assigned to each of the key qj. If the keyword "PARKING" is selected by touching the key q22 for example, only facilities including the keyword "PARKING" in the facility name among the search result are displayed in the list. The search result is acquired when the search has been performed under the input condition displayed in the search condition display part a21 and the selection condition displayed in the search condition display parts a22 and a23. Then, the number of the facilities including the keyword "PARKING" in the facility names is displayed in the number of hits display part a24.

According to the present embodiment, the search is performed using the letter string "PARK" and the facilities including the keyword "PARKING" in the names are displayed. However, the search can be performed using the keyword "PARKING".

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

## Claims

1. A facility information display system comprising:
an input unit (34, 36) that inputs a letter string representing a search condition;
a point search processing unit (31; 54) that, when the letter string has been inputted, refers to facility data and searches for facilities including the letter string;
a facility information acquisition processing unit (31; 54) that acquires facility information of the searched facilities; and
a compression processing unit (31; 54) that, based on the letter string representing the search condition, compresses the facility information to be displayed on a search result display screen in a display unit (35).

2. The facility information display system according to claim 1, wherein the compression processing unit determines whether a compression condition is met based on the letter string representing the search condition, and if the compression condition is met, compresses the facility information.

3. The facility information display system according to claim 1 or 2, wherein if the letter string representing the search condition is included in a facility name by word unit, the compression processing unit converts the letter string representing the search condition to a letter for simplification in the facility name.

4. The facility information display system according to any one of claims 1 to 3, wherein if the letter string representing the search condition is included in a facility address by word unit, the compression processing unit converts the letter string representing the search condition to a letter for simplification in the facility address.

5. The facility information display system according to any one of claims 1 to 4, wherein a plurality of keywords that are predicted by the letter string representing the search condition are displayed and the compression processing unit compresses the facility information for a keyword selected by an operator.

6. A facility information display method comprising;
when a letter string representing a search condition has been inputted in an input unit (35), referring to facility data and searching for facilities including the letter string;
acquiring facility information of the searched facilities; and
compressing the facility information to be displayed on a search result display screen in a display unit based on the letter string representing the search condition.

7. A program causing a computer function as:
a point search processing unit (31; 54) that, when a letter string representing the search condition has been inputted, refers to facility data and searches for facilities including the letter string;
a facility information acquisition processing unit (31; 54) that acquires facility information of the searched facilities; and
a compression processing unit (31; 54) that, based on the letter string representing the search condition, compresses the facility information to be displayed on a search result display screen in a display unit.
